# EUROPÄISCHE PATENTANMELDUNG

(11) **EP 4 741 626 A1**
(43) Veröffentlichungstag der Anmeldung: **13.05.2026**
(21) Anmeldenummer: 25214509.9
(22) Anmeldetag: 10.11.2025
(51) Int. Cl.: E21B 33/035, E21B 34/04

(54) **TIEFSEEVENTIL**

(30) Priorität: 11.11.2024 DE 102024210805
(71) Anmelder: Robert Bosch GmbH, 70442 Stuttgart (DE)
(72) Erfinder: Hendrix, Gottfried, 97737 Gemuenden (DE)

(57) **Zusammenfassung**

Tiefseeventil (1), aufweisend mindestens einen Ventilschieber (2), wobei der mindestens eine Ventilschieber (2) mit einem Aktuator (3) verschieblich ist, um einen Durchfluss (5) in dem Tiefseeventil (1) zu öffnen, wobei eine Federanordnung (4) an dem Tiefseeventil (1) angeordnet und eingerichtet ist, den Ventilschieber (2) zu verschieben, um den Durchfluss im Notfall zu verschließen, wobei der Aktuator (3) einen elektrischen Antrieb aufweist, wobei der Aktuator (3) und die Federanordnung (4) an gegenüberliegenden Seiten des Durchflusses (5) angeordnet sind.

## Beschreibung

Die Erfindung betrifft Tiefseeventile sowie Ventilanordnungen an Unterwasserbäumen.

Unterwasserbäume oder auch Subsea-Tress, Subsea X-Mas Trees oder Unterwasser-Eruptionskreuze (im Folgenden Unterwasserbaum genannt) umfassen Ventilanordnungen sowie mindestens ein Durchflussrohr, das vertikal auf einem Bohrloch am Meeresboden anbringbar ist. Die Unterwasserbäume dienen als Schnittstelle zwischen Rohrleitung und Bohrloch im Meeresboden. Die Ventilanordnungen umfassen Tiefseeventile zum Absperren und Regeln von Förderströmen sowie diverser Wartungsfunktionen für den Betrieb.

Die Unterwasserbäume werden im Bereich der Erdölförderung oder Speicherung von Gasen (z.B. CO₂ oder Wasserstoff im Meeresboden) genutzt. Für jedes Förderfeld bzw. Speicherfeld wird eine Mehrzahl von Bohrlöchern eingesetzt und jedes Bohrloch umfasst jeweils einen Unterwasserbaum. Somit werden für jedes Förderfeld bzw. Speicherfeld eine hohe Anzahl von Unterwasserbäumen verwendet, was hohe Kosten insbesondere bei der Installation der Unterwasserbäume verursachen kann.

Unterwasserbäume werden kostenaufwändig am Meeresboden platziert. Mit einem Kran auf einem Schiff oder einer Plattform werden die Unterwasserbäume in Wassertiefen von bis zu > 3.500 Meter senkrecht auf das Bohrloch aufgesetzt und von einem Tauchroboter angeschlossen.

Üblicherweise werden die (ferngesteuerten) Tiefseeventile eines Unterwasserbaums mit einer Hydraulikzylindereinheit mit Rückstellfeder betätigt. Die Betätigung erfolgt über einen Steuerblock mit Schaltventilen und hydraulischem Druckspeicher, die am Unterwasserbaum befestigt sind. Die Druckversorgung erfolgt von Plattformen oder Schiffen über Wasser. Bei einem Ausfall der Steuerung sind die Ventile mit den Federn aus Sicherheitsgründen in eine geschlossene Stellung versetzbar.

Die Prozessventile werden üblicherweise einseitig am Unterwasserbaum angeordnet. An einer solchen Bedienseite können mittels eines Tauchroboters auch Notbetätigungen durchgeführt werden.

Die Hydraulikzylinder und die Federn benötigen einen relativ großen Bauraum und haben eine große Masse. Zudem werden an dem Unterwasserbaum auch die Hydraulikventile mit einem Steuerblock und mindestens ein Hydraulikspeicher angebracht, die ebenfalls komplex geformt und mit einer großen Masse ausgeführt sein können. Auf einer der Bedienseite abgewandten Seite werden Steuerblock und Hydraulikspeicher angeordnet.

Hiervon ausgehend ist es Aufgabe der Erfindung, die mit Bezug auf den Stand der Technik geschilderten Probleme zumindest teilweise zu lösen. Insbesondere soll eine Möglichkeit geschaffen werden, mit der Unterwasserbäume einfacher zu transportieren und installieren sind. Insbesondere um die Installation vieler Unterwasserbäume am Meeresgrund zu vereinfachen und kostengünstiger zu gestalten, ist es wünschenswert, wenn die Unterwasserbäume kompakter und ggf. leichter gestaltet werden. Ganz besonders steht eine einfachere Montage und dauerhaltbarere Montage am Bohrloch des Meeresgrundes im Fokus.

Diese Aufgabe wird durch die Merkmale der unabhängigen Ansprüche gelöst. Weitere vorteilhafte Ausgestaltungen der Erfindung sind in den abhängigen Ansprüchen angegeben. Es ist darauf hinzuweisen, dass in den Ansprüchen einzeln aufgeführte Merkmale in beliebiger, technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindungen dargestellt werden.

Zur Lösung dieser Aufgabe trägt ein Tiefseeventil bei, aufweisend mindestens einen Ventilschieber. Der mindestens eine Ventilschieber ist mit einem Aktuator verschieblich, um (gezielt) einen Durchfluss in dem Tiefseeventil zu öffnen oder zu schließen. Eine Federanordnung ist ebenfalls an dem Tiefseeventil angeordnet und eingerichtet, den Ventilschieber zu verschieben, um den Durchfluss im Notfall (wenn der Aktuator hierfür nicht verfügbar ist und/oder selbstständig) zu verschließen. Der Aktuator weist einen elektrischen Antrieb auf. Der Aktuator und die Federanordnung sind dabei an gegenüberliegenden Seiten des Durchflusses angeordnet.

Das Tiefseeventil ist bevorzugt für einen Betrieb unter Wasser verwendbar. Insbesondere kann das Tiefseeventil in Tiefen von mindestens 1.000 Metern, insbesondere mindestens 3.000 Metern und ggf. sogar mehr als 3.500 Metern verwendet werden. Das Tiefseeventil kann an einem Bohrloch bei einer Förderung beispielsweise von Erdöl verwendet werden. Es ist auch an einem Bohrloch für eine Speicherstätte beispielsweise von CO₂ [Kohlenstoffdioxid] verwendbar. Das Tiefseeventil kann verwendet werden, um einen Zufluss bzw. Abfluss an dem Bohrloch zu regulieren und insbesondere zu öffnen und/oder zu schließen. Ebenso können mit dem Tiefseeventil Wartungsfunktionen ermöglicht werden.

Der Ventilschieber ist bevorzugt ein Flachschieber. Bevorzugt kann der Ventilschieber eine Öffnung und einen Verschluss aufweisen. Der Ventilschieber kann axial so verschoben werden, dass die Öffnung teilweise oder vollständig einen Zufluss bzw. Abfluss (Durchfluss) an dem Bohrloch freigibt. Es ist möglich, dass der Ventilschieber so verschoben wird, dass der Verschluss den Durchfluss an dem Bohrloch vollständig blockiert.

Der Ventilschieber ist mit einem Aktuator verschieblich. Der Aktuator kann dabei den Ventilschieber quer zu dem Bohrloch verschieben. Der Aktuator kann fest oder koppelbar mit dem Tiefseeventil verbunden sein. Es ist möglich, dass der Aktuator den Ventilschieber direkt betätigt. Dabei ist der Aktuator bevorzugt so angeordnet, dass er eine Verfahrrichtung hat, die auf einer Verschiebeachse mit einer Verfahrrichtung des Ventilschiebers liegt. Insbesondere kann der Aktuator den Ventilschieber ohne Umlenkung oder Übersetzung verschieben.

Es ist vorgesehen, dass das Tiefseeventil (mindestens) einen Durchfluss aufweist, der mit dem Ventilschieber verschließbar ist. Der Durchfluss kann ein Rohrabschnitt in dem Tiefseeventil sein. Bevorzugt ist der Durchfluss zylinderförmig. Der Durchfluss kann mit dem Bohrloch verbunden sein. Es ist möglich, dass das Bohrloch und der Durchfluss auf einer Achse liegen. Es ist möglich, dass das Bohrloch und der Durchfluss Achsen aufweisen, die versetzt zueinander parallel verlaufen. Bevorzugt verläuft die Achse des Tiefseeventils durch einen Mittelpunkt des Durchflusses und quer zu der Verschiebeachse. Insbesondere kann die Achse und der Durchfluss eine Durchflussachse des Tiefseeventils sein.

Es ist möglich, dass die Federanordnung mindestens eine Feder aufweist. Bevorzugt weist die Federanordnung eine, zwei, drei, vier, fünf oder eine Vielzahl von Federn auf. Bevorzugt ist die Federanordnung so ausgestaltet, dass sie eine konstante (in eine Richtung gerichtete) Federkraft aufweist. Insbesondere kann der Ventilschieber mit der Federanordnung (in gleicher bzw. entgegengesetzter Richtung wie mit dem Aktuator) verschoben werden. Es ist möglich, dass die Federkraft der Federanordnung so ausgelegt ist, dass der Durchfluss im Notfall verschließbar ist, also insbesondere wenn der Aktuator nicht aktiv ist. Es ist möglich, dass die Federkraft so hoch ist, dass der Durchfluss auch bei einem hohen Druck verschließbar ist.

Es ist möglich, dass die Federn der Federanordnung in einer Buchse angeordnet sind, die an dem Tiefseeventil befestigt ist. Die Federn können mit einem ersten Ende gegen einen Anschlag der Buchse gelagert sein und mit einem anderen Ende auf den Ventilschieber die Federkraft ausüben.

Bevorzugt ist der elektrische Antrieb im Aktuator angeordnet. Insbesondere kann der Aktuator einen (eigenen bzw. eingehausten) Elektromotor aufweisen. Der Elektromotor kann eine interne Stromquelle aufweisen, die in dem Aktuator angeordnet ist. Es ist möglich, dass die interne Stromquelle eine Batterie ist. Es ist möglich, dass der Aktuator über ein Stromkabel mit Strom versorgt wird und keine interne Stromquelle aufweist. Es ist möglich, dass das Stromkabel mit einer Stromquelle auf einer Plattform oder einem Schiff an der Wasseroberfläche verbunden ist.

Der Aktuator und die Federanordnung sind an (diametral) gegenüberliegenden Seiten des Durchflusses angeordnet. Es ist möglich, dass der Aktuator und die Federanordnung jeweils eine entgegengesetzte Kraft auf der gemeinsamen Verschiebeachse ausüben.

Es ist möglich, dass die Federanordnung und der Aktuator über eine Welle verbindbar oder verbunden sind. Der Ventilschieber kann auf der Welle angeordnet sein. Es ist möglich, dass die Welle jeweils einen Wellenabschnitt aufweist, die auf einer gemeinsamen Verschiebeachse liegen und gegenüberliegend an dem Ventil befestigt sind. Die Wellenabschnitte können jeweils ein freies Ende aufweisen. An einem freien Ende des einen Wellenabschnitts kann der Aktuator verbunden oder verbindbar sein. An einem freien Ende des anderen Wellenabschnitts kann die Federanordnung verbunden oder verbindbar sein. Bevorzugt ist die Federanordnung fest mit dem einen freien Ende des Wellenabschnitts verbunden. Es ist möglich, dass so die Sicherheitsfunktion konstant gewährleistet ist und der Ventilschieber im Notfall immer so verschiebbar ist, dass der Durchfluss geschlossen wird. Bevorzugt ist das andere freie Ende mit dem Aktuator wechselbar verbunden. Es ist möglich, den Aktuator anzuschließen oder abzuschließen, während das Tiefseeventil verbaut bzw. in Betrieb ist.

Die Federanordnung kann mindestens eine Feder aufweisen, die einer Schubkraft des Aktuators (zum Öffnen des Durchflusses) entgegenwirkt. Es ist möglich, dass der Aktuator eine Schubkraft auf den Ventilschieber ausübt, um diesen so zu verschieben, dass der Durchfluss geöffnet und ggf. auch geschlossen wird. Dabei kann die Schubkraft des Aktuators gegen die Federkraft der Federanordnung wirken. Es ist möglich, dass zu einem Öffnen bzw. Offenhalten des Durchflusses eine konstante Schubkraft des Aktuators auf den Ventilschieber ausgeübt wird, die entgegengesetzt zu der Federkraft der Federanordnung wirkt. Es ist möglich, dass im Falle eines Stromausfalls oder eines Notfalls, der Ventilschieber durch die Federkraft der Federanordnung zurückgeschoben wird und den Durchfluss verschließt. Es ist möglich, dass so ein Sicherheitsverschluss gewährleistet ist, der es ermöglicht, den Durchfluss und damit das Bohrloch jederzeit sicher zu verschließen.

Die Federanordnung und der Aktuator können so angeordnet sein, dass das Tiefseeventil entlang der Durchflussachse des Tiefseeventils im Gleichgewicht ist. Es ist möglich, dass sich die Verschiebeachse und die Durchflussachse im Mittelpunkt des Durchflusses kreuzen. Es ist möglich, dass das Tiefseeventil so ausgestaltet ist, dass es so im Gleichgewicht ist, dass es kein Kippmoment quer zu der Durchflussachse aufweist. Mit anderen Worten liegt der Schwerpunkt des Tiefseeventils (etwa) im Mittelpunkt des Durchflusses.

Der Aktuator kann über eine Schnittstelle mit dem Tiefseeventil verbunden sein und wechselbar / koppelbar sein. Es ist möglich, die Schnittstelle für einen standardisierten Aktuator vorzusehen. Es ist möglich, dass der Aktuator während des Betriebs wechselbar ist. Insbesondere ist es möglich, dass der Aktuator im Fehlerfall auswechselbar ist. Es ist möglich, dass bei einer Auswechslung des Aktuators das Tiefseeventil durch die Federkraft der Federanordnung in einer geschlossenen Position gehalten wird. So kann der Aktuator gewechselt werden, ohne dass der Durchfluss offen steht. Es ist möglich, dass das Tiefseeventil nur geöffnet werden kann, wenn der Aktuator angeschlossen und funktionstüchtig ist.

Zur Lösung der Aufgabe trägt eine Ventilanordnung in einem Unterwasserbaum mit einem Durchflussrohr und einer Mehrzahl der beschriebenen Tiefseeventile bei. Die Tiefseeventile können an der Ventilanordnung in unterschiedlichen Positionen angeordnet sein.

Bevorzugt werden Unterwasserbäume auf dem Bohrloch platziert und weisen mindestens ein Durchflussrohr auf, das direkt mit dem Bohrloch verbindbar ist. Somit kann der Unterwasserbaum als Anschluss für weitere Rohre dienen, um Flüssigkeiten und/oder Gase aus dem Bohrloch abzuführen oder in dieses hineinzuleiten. Es ist möglich, dass der Unterwasserbaum im mindestens einen Durchflussrohr mindestens eines der beschriebenen Tiefseeventile aufweist, sodass der Durchfluss gestoppt und/oder geöffnet und insbesondere reguliert werden kann. Es ist auch möglich parallel zu einem zentralen Durchflussrohr und den darin angeordneten Tiefseeventilen weitere dezentrale Durchflussrohre mit Tiefseeventilen in dem Unterwasserbaum vorzusehen. Es ist möglich, diese weiteren Tiefseeventile für Wartungsfunktionen oder weitere Regulierungen des Durchflusses durch das Durchflussrohr zu verwenden. Es ist möglich, die gesamte Ventilanordnung in dem Unterwasserbaum zu platzieren, sodass alle Ventile in einem Bauteil auf dem Bohrloch platzierbar sind.

Die Mehrzahl an Tiefseeventilen kann auf verschiedenen Achsen versetzt in dem Unterwasserbaum angeordnet sein, sodass der Unterwasserbaum entlang einer Zentralachse des Durchflussrohrs im Gleichgewicht ist. Die Zentralachse des Durchflussrohrs verläuft durch den Mittelpunkt des Durchflussrohrs. Es ist möglich, dass der Unterwasserbaum mit einem Kran bewegbar ist und über dem Bohrloch platziert werden kann. Bevorzugt ist der Unterwasserbaum so ausgestaltet, dass er senkrecht über dem Bohrloch abgelassen werden kann, wenn er seitlich am Durchflussrohr gehalten wird. Bevorzugt kann der Unterwasserbaum an dem Bohrloch befestigt werden, ohne dass ein Kippmoment quer zu dem Durchflussrohr wirkt.

Die Ventilanordnung kann einen Steuerblock umfassen. Der Steuerblock kann mindestens eine Steuereinheit aufweisen, mit der jeweils ein Aktuator betätigbar ist. Es ist möglich, dass alle Aktuatoren der Tiefseeventile der Ventilanordnung mit dem Steuerblock verbunden sind. Der Steuerblock kann zudem manuelle Betätigungsmöglichkeiten aufweisen, sodass die Aktuatoren manuell betätigbar sind. Es ist möglich, dass die Steuereinheit eine zentrale Stromzufuhr für alle Aktuatoren ist. Es können alle Aktuatoren von der Steuereinheit einzeln angesteuert werden. Bevorzugt ist der Steuerblock an den Aktuatoren befestigt. Es ist möglich, dass der Steuerblock zudem direkt mit dem Unterwasserbaum verbunden ist. Bevorzugt ist der Steuerblock so befestigt, dass der Unterwasserbaum entlang der Zentralachse des Durchflussrohrs im Gleichgewicht ist.

Das Tiefseeventil schafft insbesondere Vorteile bzw. Linderung hinsichtlich der eingangs genannten Probleme. Die für das Tiefseeventil beschriebenen besonderen Vorteile und Ausgestaltungsmerkmale sind auf die beschriebene Ventilanordnung anwendbar und übertragbar und umgekehrt.

Die Erfindung und das technische Umfeld werden nachfolgend anhand von zwei Figuren näher erläutert. Die Darstellungen sind schematisch und nicht zur Veranschaulichung von Größenverhältnissen vorgesehen. Die mit Bezug auf einzelne Details der Figur angeführten Erläuterungen sind extrahierbar und mit Sachverhalten aus der vorstehenden Beschreibung frei kombinierbar, es sei denn, dass sich für einen Fachmann zwingend etwas anderes ergibt, bzw. eine solche Kombination explizit ausgeschlossen wird. Es zeigen schematisch:
- Fig. 1:: Unterwasserbaum mit Ventilanordnung und
- Fig. 2:: Tiefseeventil in dem Unterwasserbaum.

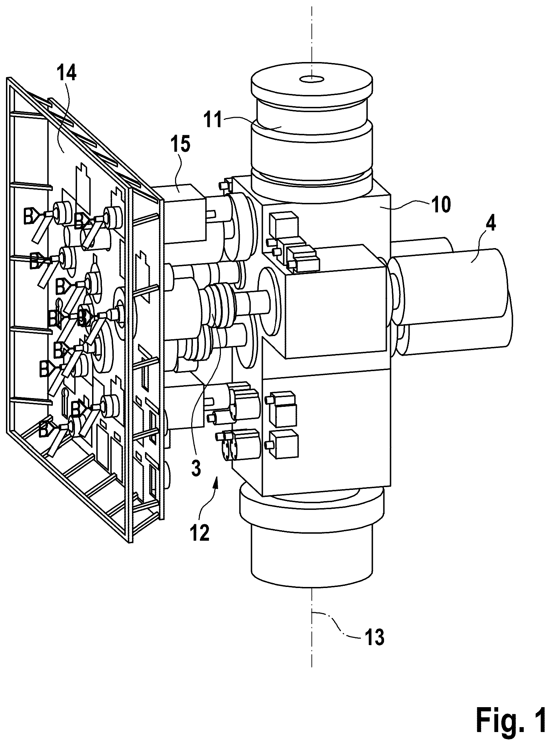

Fig. 1 zeigt einen Unterwasserbaum 10. Der Unterwasserbaum 10 weist eine Ventilanordnung 12 auf mit einer Mehrzahl an Aktuatoren 3 und Federanordnungen 4. Die Aktuatoren 3 sind verbunden mit einem Steuerblock 14, der jeweils eine Steuereinheit 15 pro Aktuator 3 aufweist. Der Unterwasserbaum weist ein Durchflussrohr 11 auf, das eine Zentralachse 13 hat. Die Aktuatoren 3 sind mit dem Steuerblock 14 auf einer gegenüberliegenden Seite des Unterwasserbaums 10 zu den Federanordnungen 4 angebracht. Insbesondere sind die Federanordnungen 4 und die Aktuatoren 3 so an dem Unterwasserbaum 10 angeordnet, dass er entlang der Zentralachse des Durchflussrohrs 13 im Gleichgewicht ist. Der Unterwasserbaum 10 weist kein quer zu der Zentralachse des Durchflussrohrs 13 verlaufendes Kippmoment auf.

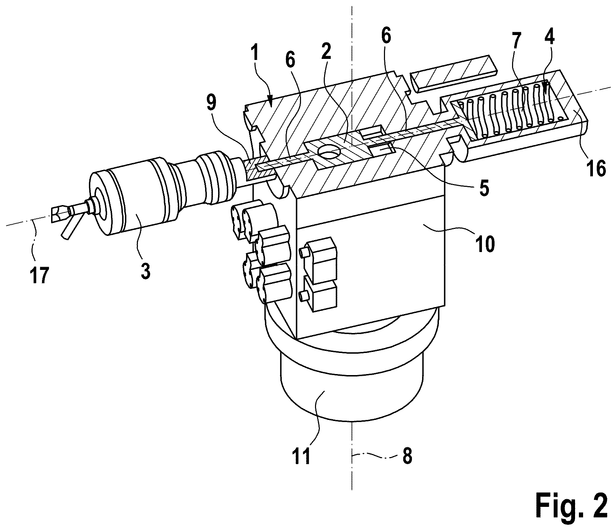

Fig. 2 zeigt eine Schnittdarstellung eines Tiefseeventils 1 in dem Unterwasserbaum 10 auf. Das Tiefseeventil 1 umfasst den Aktuator 3, eine Federanordnung 4 und einen Ventilschieber 2. Der Ventilschieber 2 ist mit einer Welle 6 jeweils mit dem Aktuator 3 und mit der Federanordnung 4 verbunden. Die Federanordnung 4 weist eine Feder 7 auf, die auf die Welle 6 und somit auf den Ventilschieber 2 wirkt. Die Federn 7 der Federanordnung 4 sind in einer Buchse 16 angeordnet. Die Federn 7 sind mit einem ersten Ende gegen einen Anschlag der Buchse 16 gelagert sein und üben mit einem anderen Ende auf die Welle 6 des Ventilschiebers 2 eine Federkraft aus. Der Aktuator 3 ist an einer Schnittstelle 9 mit dem Unterwasserbaum 10 verbindbar. Der Ventilschieber 2 ist verschiebbar, sodass er einen Durchfluss 5 öffnen und schließen kann. Der Ventilschieber 2 ist entlang einer Verschiebeachse 17 verschiebbar, auf der zudem der Aktuator 3 und die Federanordnung 4 angeordnet sind. Der Durchfluss 5 weist zudem eine Durchflussachse 8 auf. Die Durchflussachse 8 kann versetzt zu der Zentralachse des Durchflussrohrs 13 sein. Der Aktuator 3 und die Federanordnung 4 sind so angeordnet, dass das Tiefseeventil 1 entlang der Durchflussachse 8 im Gleichgewicht ist.

Mit der hier vorgeschlagenen Lösung können die mit Bezug auf den Stand der Technik geschilderten Probleme zumindest teilweise gelindert werden. Insbesondere wurden Lösungen aufgezeigt, mit denen ein leichter und kompakter Unterwasserbaum mit einem verbesserten Tiefseeventil vorgeschlagen wird.

### Bezugszeichen

- 1: Tiefseeventil
- 2: Ventilschieber
- 3: Aktuator
- 4: Federanordnung
- 5: Durchfluss
- 6: Welle
- 7: Feder
- 8: Durchflussachse
- 9: Schnittstelle
- 10: Unterwasserbaum
- 11: Durchflussrohr
- 12: Ventilanordnung
- 13: Zentralachse des Durchflussrohrs
- 14: Steuerblock
- 15: Steuereinheit
- 16: Buchse
- 17: Verschiebeachse

## Patentansprüche

1. Tiefseeventil (1), aufweisend mindestens einen Ventilschieber (2), wobei der mindestens eine Ventilschieber (2) mit einem Aktuator (3) verschieblich ist, um einen Durchfluss (5) in dem Tiefseeventil (1) zu öffnen, wobei eine Federanordnung (4) an dem Tiefseeventil (1) angeordnet und eingerichtet ist, den Ventilschieber (2) zu verschieben, um den Durchfluss im Notfall zu verschließen, wobei der Aktuator (3) einen elektrischen Antrieb aufweist, und wobei der Aktuator (3) und die Federanordnung (4) an gegenüberliegenden Seiten des Durchflusses (5) angeordnet sind.

2. Tiefseeventil (1) nach Anspruch 1, wobei die Federanordnung (4) und der Aktuator (3) über eine Welle (6) verbindbar oder verbunden sind, wobei auf der Welle (6) der Ventilschieber (2) angeordnet ist.

3. Tiefseeventil (1) nach einem der vorherigen Ansprüche, wobei die Federanordnung (4) mindestens eine Feder (7) aufweist, die einer Schubkraft des Aktuators (3) entgegenwirkt.

4. Tiefseeventil (1) nach einem der vorherigen Ansprüche, wobei die Federanordnung (4) und der Aktuator (3) so angeordnet sind, dass das Tiefseeventil (1) entlang einer Durchflussachse (8) im Gleichgewicht ist.

5. Tiefseeventil (1) nach einem der vorherigen Ansprüche, wobei der Aktuator (3) über eine Schnittstelle (9) mit dem Ventilschieber (2) verbunden ist und wechselbar ist.

6. Unterwasserbaum (10) mit mindestens einem Durchflussrohr (11) und einer Ventilanordnung (12), umfassend eine Mehrzahl von Tiefseeventilen (1) nach den vorherigen Ansprüchen.

7. Unterwasserbaum (10) nach Anspruch 6, wobei die Mehrzahl Tiefseeventile (1) auf verschiedene Achsen versetzt in dem Unterwasserbaum (10) angeordnet sind, sodass der Unterwasserbaum (10) entlang einer Zentralachse des Durchflussrohrs (13) im Gleichgewicht ist.

8. Unterwasserbaum (10) nach einem der Ansprüche 6 oder 7, umfassend einen Steuerblock (14), wobei der Steuerblock (14) mindestens eine Steuereinheit (15) aufweist, mit der jeweils ein Aktuator (3) betätigbar ist.
